# EUROPEAN PATENT SPECIFICATION

(11) **EP 1 170 172 B1**
(45) Date of publication and mention of the grant of the patent: **17.09.2008**
(21) Application number: 01116039.7
(22) Date of filing: 02.07.2001
(51) Int. Cl.: B60Q 1/48, B60R 21/00

(54) **Apparatus for displaying rear view from moving body and method of displaying the rear view**
Einrichtung zur Rückblickanzeige von einem sich bewegenden Körper und Verfahren zur Rückblickanzeige
Appareil d'affichage de la vue arrière depuis un objet mobile et méthode pour l'affichage de cette vue arrière

(30) Priority: 03.07.2000 JP 2000201316
(43) Date of publication of application: 09.01.2002
(73) Proprietor: Toyota Jidosha Kabushiki Kaisha, Toyota-shi, Aichi-ken, 471-8571 (JP); AISIN SEIKI KABUSHIKI KAISHA, Kariya-shi, Aichi-ken, 448-8650 (JP)
(72) Inventor: Katsuno, Toshiyasu, Toyota-shi, Aichi-ken, 471-8571 (JP); Kubota, Yuichi, Toyota-shi, Aichi-ken, 471-8571 (JP); Okazaki, Osamu, Toyota-shi, Aichi-ken, 471-8571 (JP); Kakinami, Toshiaki, Kariya-shi, Aichi-ken, 448-8650 (JP)
(74) Representative: TBK-Patent

(56) References cited:
- EP-A- 1 123 844
- WO-A-00/74976
- PATENT ABSTRACTS OF JAPAN vol. 2000, no. 06, 22 September 2000 (2000-09-22) & JP 2000 078566 A (AISIN SEIKI CO LTD), 14 March 2000 (2000-03-14)

## Description

### BACKGROUND OF THE INVENTION

### 1.Field of the Invention

The present invention relates to a display apparatus for displaying a rear view from a moving body or a vehicle, and a method of displaying the rear view. More particularly, the present invention is concerned with a display apparatus including a display screen on which there is displayed a rear view taken from the moving body in the backward direction, and a method of displaying the rear view on the display screen.

### 2.Description of the Related Art

JP-B2-2610146 discloses an example of a conventional display apparatus arranged to display a rear view taken rearwardly of an automotive vehicle, on a monitoring display located near a vehicle operator's seat. In this display apparatus, an estimated path of backward movement of the vehicle which corresponds to an actual steering angle of the vehicle is superimposed on the rear view displayed on the monitoring display. Further, an estimated path of backward movement of the vehicle which corresponds to a maximum permissible steering angle of the vehicle is also superimposed on the displayed rear view. This conventional rear-view display apparatus is useful when the vehicle is moved backwards with a changeover or reversal in the steering direction of the vehicle, for instance, when the vehicle is turned backwards into a garage. Information displayed on the monitoring display enables the vehicle operator to judge a possible amount of further increase of the angle of the steering operation in the same direction before the changeover should take place. Thus, the rear-view display apparatus permits even an inexperienced vehicle driver to adequately manipulate the steering wheel for backward movement of the vehicle for parking.

The rear-view display apparatus includes a camera provided to take the rear view from the vehicle in the backward direction. The camera generally has a variation in its focal length. Further, individual vehicles have, in a strict sense, different overall characteristics and different characteristics of various components thereof, which cause a variation in the height of the vehicle, more specifically, a variation in the vertical position of the camera. Accordingly, a vertical field of the rear view actually taken by the camera on a specific vehicle may more or less deviate from the nominal vertical field. This deviation in the vertical field may cause a deviation of the actual path of backward movement of the vehicle, from the estimated path of backward movement of the vehicle corresponding to the maximum permissible steering angle of the vehicle, even if the vehicle is turned backwards at the maximum steering angle along the estimated path of backward movement being displayed on the monitoring display. In this case, the vehicle operator may wish to increase the steering angle for rectifying the actual path of backward movement of the vehicle. However, the steering angle can no longer be increased. Thus, the conventional rear-view display apparatus may suffer from a failure to rectify the actual path of backward movement of the vehicle even when the actual path deviates from the estimated path corresponding to the maximum vehicle steering angle.

Furthermore, JP 2000-078566 A (preamble of claim 1, resp claim 9) and WO 00 74976 A, which is a postpublished document being relevant for novelty only, describe a device for visualizing a driving path for backwards movement. Therefore, each of the disclosures describes an image pickup system being placed in the rear of a vehicle. A controller is adapted to superimpose an estimated driving path on a display, based on the actual steering angle of the vehicle. In addition, a vehicle locus at a maximized steering angle can be superimposed on the display.

As pointed out above, the conventional rear-view display apparatus cannot be said to be satisfactory in its adequacy of the estimated path of backward movements of the vehicle displayed for assisting the vehicle operator to suitably steer the vehicle.

### SUMMARY OF THE INVENTION

It is therefore an object of the present invention to provide a rear-view display apparatus and a method of displaying, which can cope with the situation of different vertical positions for mounting on a vehicle a rear camera used for the display apparatus.

This object is achieved according to a first aspect of this invention, which provides a rear-view display apparatus for displaying on a display screen a rear view taken from a moving body in a backward direction, according to claim 1.

This object is achieved according to a further aspect of the present invention, which provides a method displaying on a display screen a rear view taken from a moving body in a backward direction according to claim 9.

Further features and advantageous modifications are shown in the dependent claims.

### BRIEF DESCRIPTION OF THE DRAWINGS

The above and other objects, features, advantages, and technical and industrial significance of this invention will be better understood by reading the following detailed description of exemplary embodiments of the invention, when considered in connection with the accompanying drawings, in which:

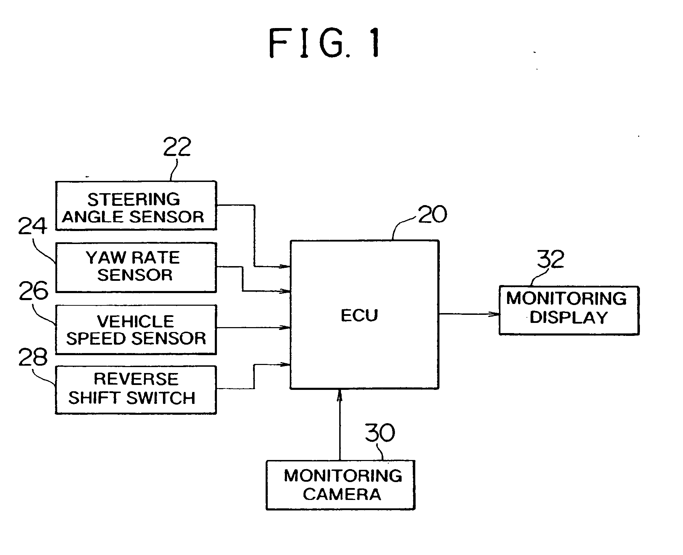

Fig. 1 is a block diagram illustrating a rear-view display apparatus constructed according to the principle of this invention, for displaying a rear view taken from a moving body in the backward direction;

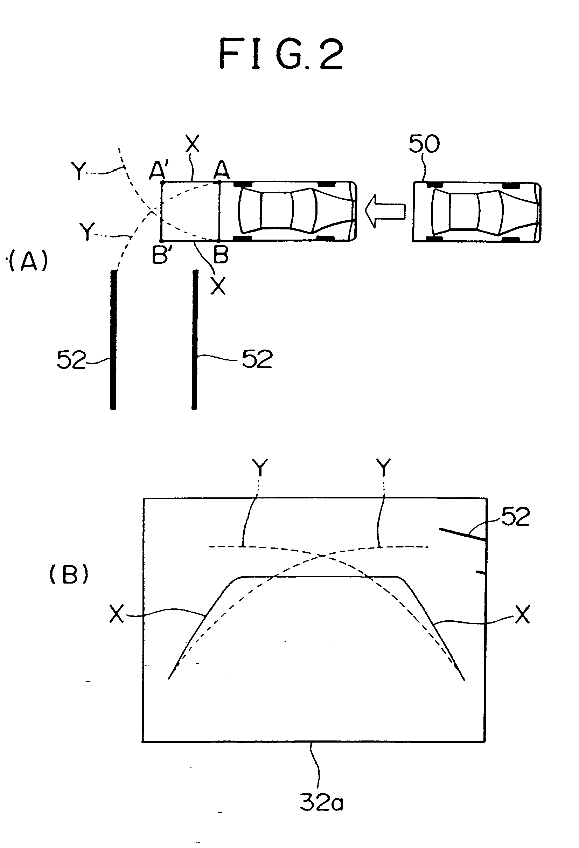

Fig. 2(A) is a view showing an automotive vehicle when it is turned backwards into a parking area defined by and between two white lines, and Fig. 2(B) is a view schematically showing a view displayed on a monitoring display of the rear-view display apparatus according to a first embodiment of the invention, in a situation shown in Fig. 2(A);

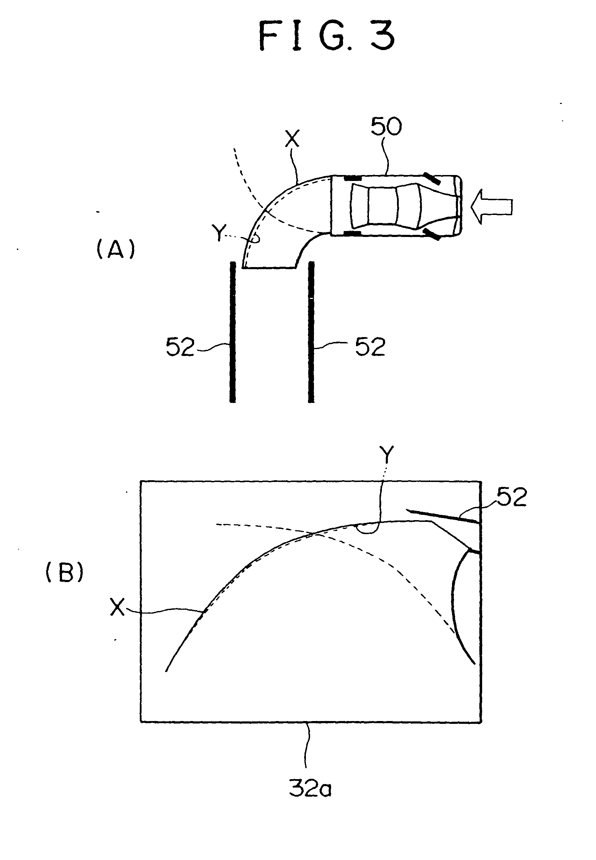

Fig. 3(A) is a view showing another situation of the automotive vehicle in the process of backward turning into the parking area defined by the white lines, and Fig. 3(B) is a view schematically illustrating a view displayed on the monitoring display of the display apparatus according to the first embodiment, in the situation shown in Fig. 3(A);

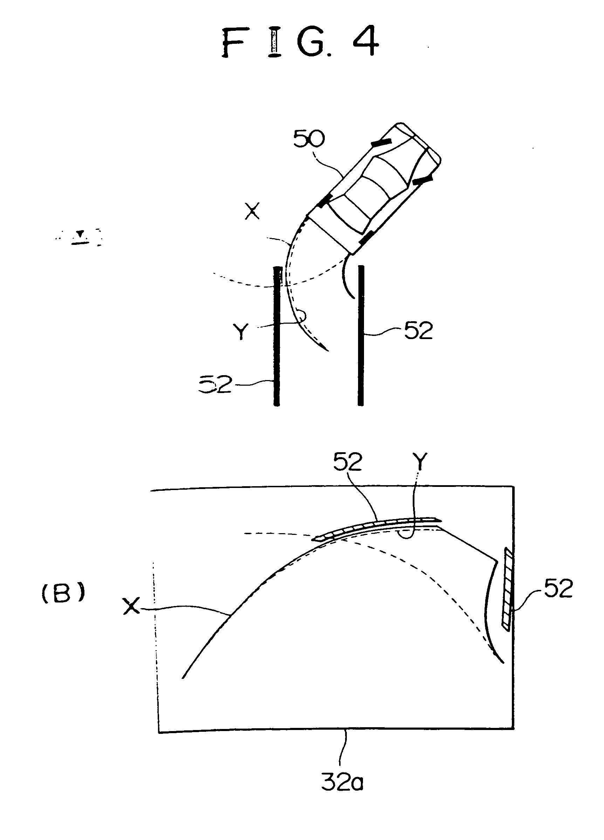

Fig. 4(A) is a view showing a further situation of the automotive vehicle in the process of backward turning into the parking area between the two white lines, and Fig. 4(B) is a view schematically illustrating a view displayed on the monitoring display of the display apparatus according to the first embodiment, in the situation shown in Fig. 4(A);

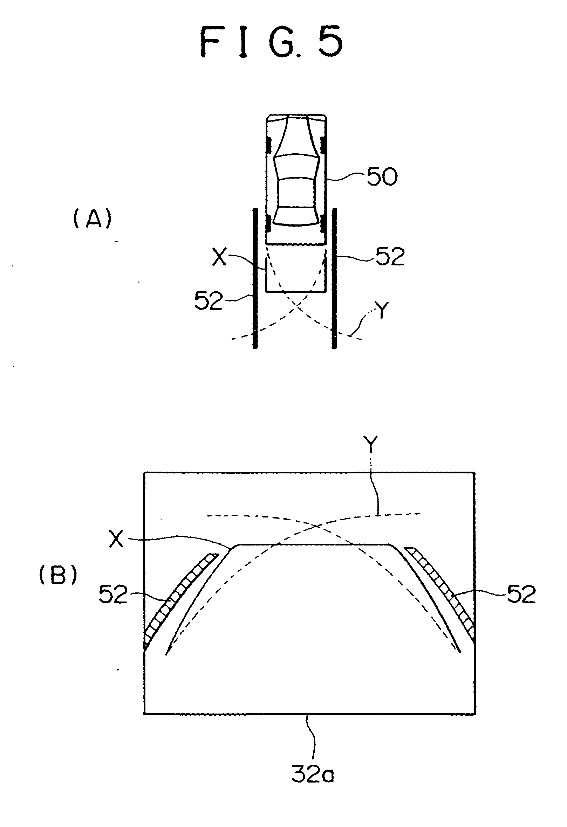

Fig. 5(A) is a view showing a still further situation of the automotive vehicle in the process of backward turning into the parking area between the two white lines, and Fig. 5(B) is a view schematically illustrating a view displayed on the monitoring display of the display apparatus according to the first embodiment, in the situation shown in Fig. 5(A);

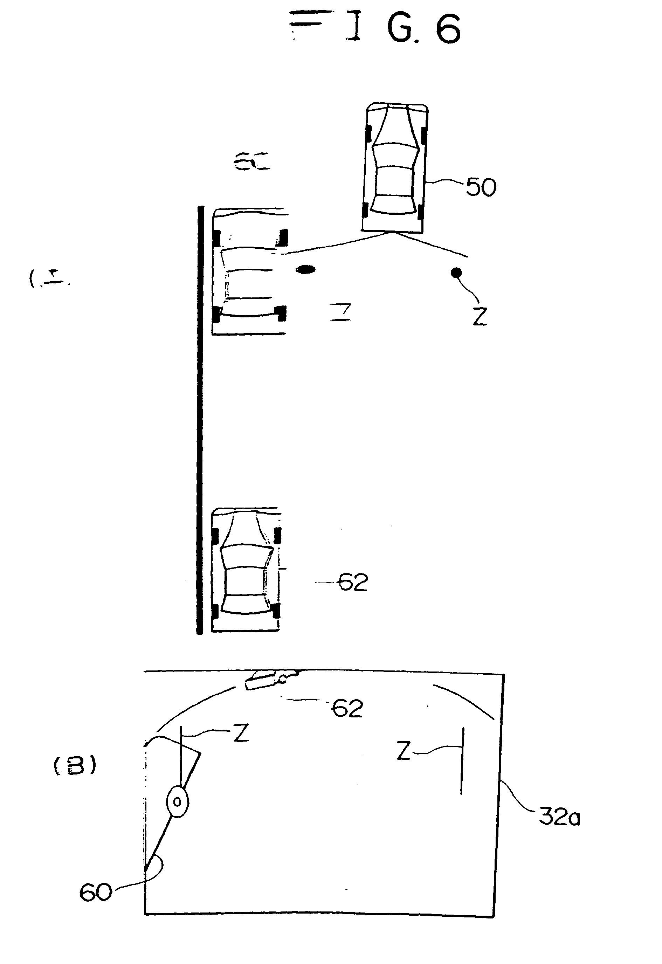

Fig. 6(A) is a view showing an automotive vehicle when it is turned backwards into a parking area between two other vehicles such that the three vehicles are parked in a line, and Fig. 6(B) is a view schematically illustrating a view displayed on the monitoring screen of the display apparatus according to the first embodiment, in a situation shown in Fig. 6(A);

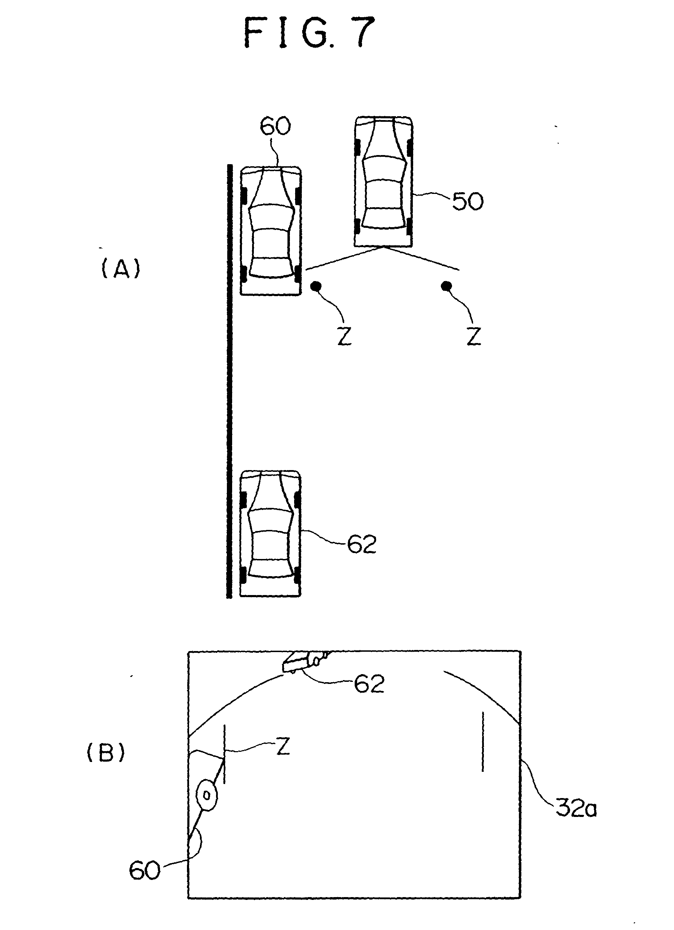

Fig. 7(A) is a view showing another situation of the automotive vehicle in the process of backward turning into the parking area between the two other vehicles, and Fig. 7(B) is a view schematically illustrating a view displayed on the monitoring display of the display apparatus according to the first embodiment, in the situation shown in Fig. 7(A);

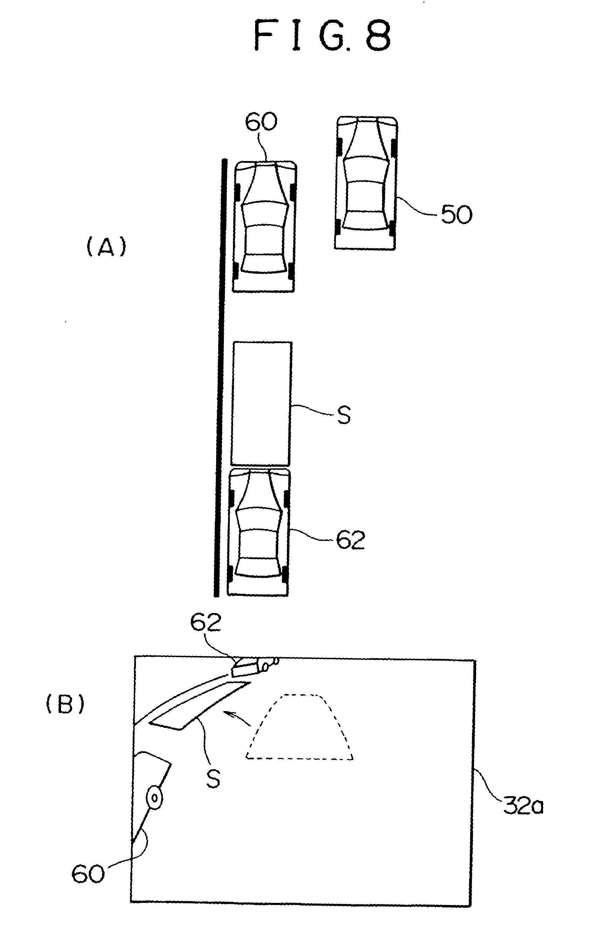

Fig. 8(A) is a view showing a further situation of the automotive vehicle in the process of backward turning into the parking area between the two other vehicles, and Fig. 8(B) is a view schematically illustrating a view displayed on the monitoring display of the display apparatus according to the first embodiment, in the situation shown in Fig. 8(A);

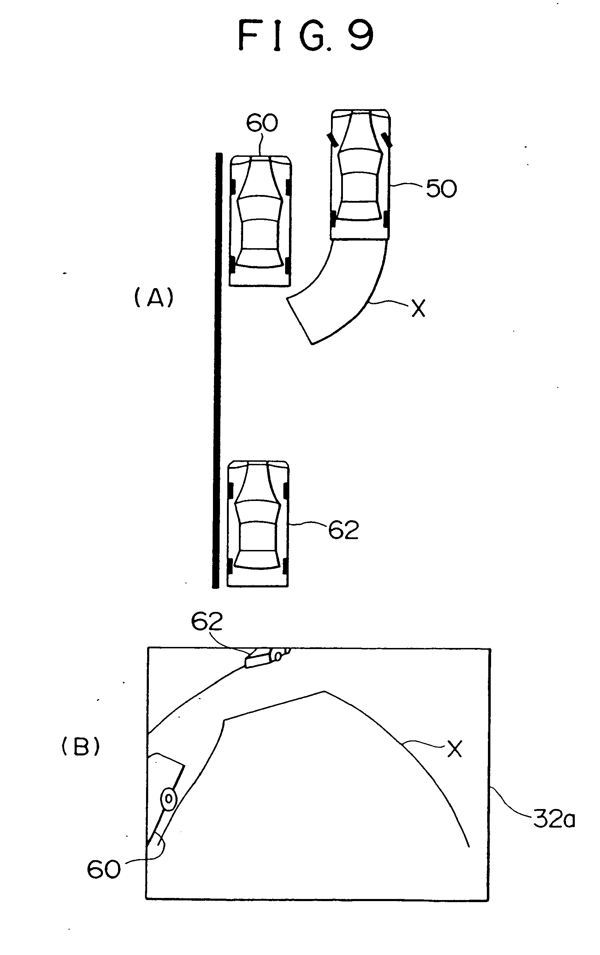

Fig. 9(A) is a view showing a still further situation of the automotive vehicle in the process of backward turning into the parking area between the two other vehicles, and Fig. 9(B) is a view schematically illustrating a view display on the monitoring display of the display apparatus according to the first embodiment, in the situation shown in Fig. 9(A);

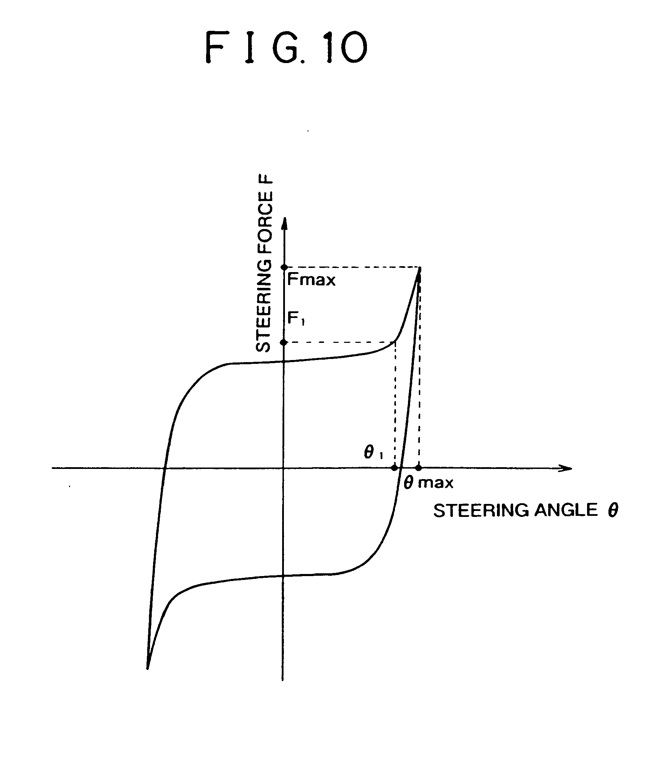

Fig. 10 is a graph indicating a relationship between a steering angle θ and a steering force F acting on the steering wheel operated by the vehicle operator;

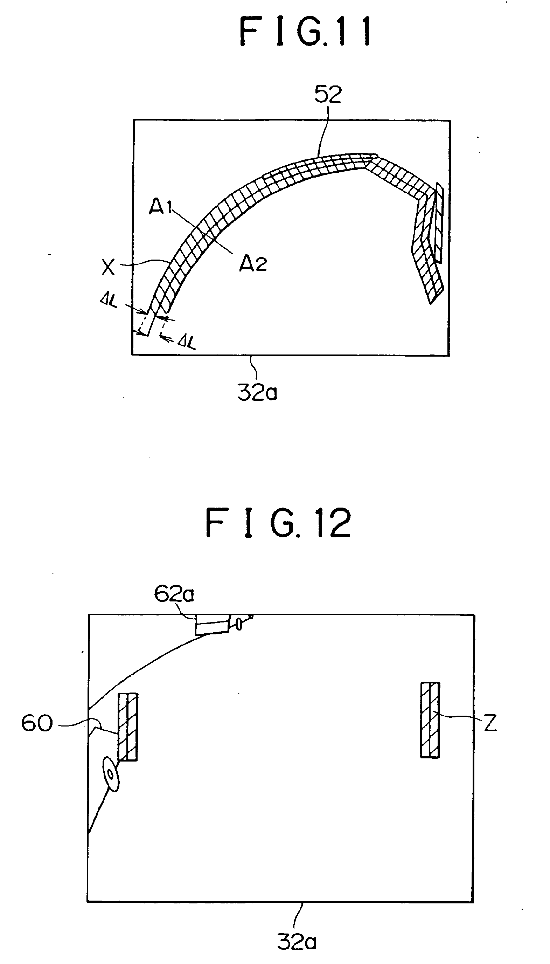

Fig. 11 is a view schematically illustrating a view displayed on a monitoring display of a rear-view display apparatus according to a second embodiment of the present invention, in the situation shown in Fig. 4(A);
Fig. 12 is a view schematically illustrating a view displayed on the monitoring display of the display apparatus according to the second embodiment, in the situation shown in Fig. 7(A);

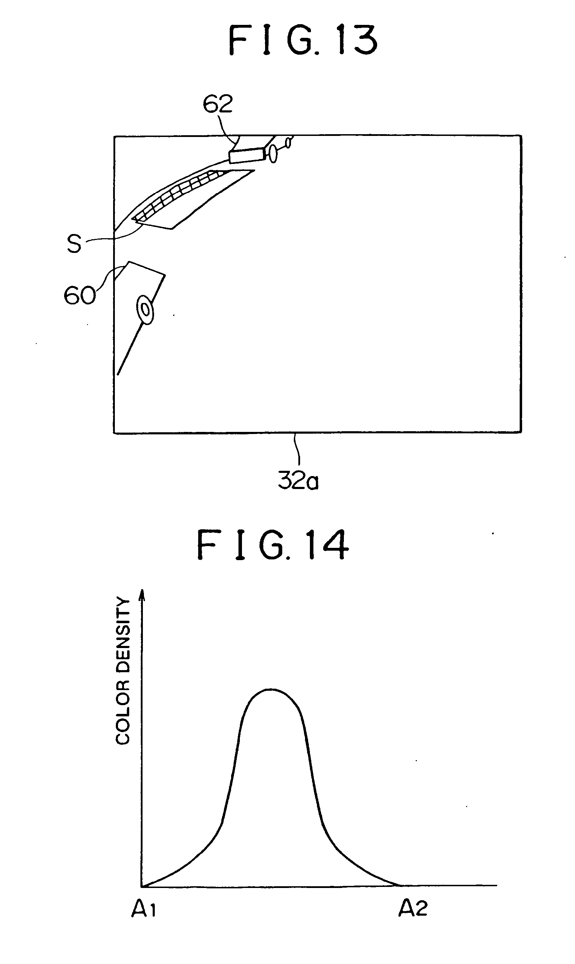

Fig. 13 is a view schematically illustrating a view displayed on the monitor screen of the display apparatus according to the second embodiment, in the situation shown in Fig. 8(A); and
Fig. 14 is a graph indicating a distribution of color density taken along line A₁-A₂ cross the path X in the form of a strip in the view displayed on the monitoring display in the case of Fig. 11.

### DETAILED DESCRIPTION OF THE PREFERRED EMBODIMENTS

The presently preferred embodiments of the present invention will be described by reference to the accompanying drawings. Referring first to the block diagram of Fig. 1, there is shown a rear-view display apparatus constructed according to the principle of this invention, for displaying a rear view taken from an automotive vehicle in the backward direction. The rear-view display apparatus according to the present invention is applicable to any moving body or subject other than the automotive vehicle. This display apparatus includes an electronic control unit (hereinafter abbreviated as "ECU") 20, which controls a monitoring display 32 provided to assist the vehicle operator when the vehicle is moved backwards, as described below.

The present rear-view display apparatus includes a steering angle sensor 22(A), yaw rate sensor 24(A), and a vehicle speed sensor 26, which are connected to the ECU 20. The steering angle sensor 22 generates an output signal representative of a steering angle θ of a steering wheel operable by the vehicle operator. The yaw rate sensor 24 generates an output signal representative of a angular velocity about the gravity center of the vehicle, namely, a yaw rate ω of the vehicle. The vehicle speed sensor 26 generates a pulse signal the period of which represents a running speed SPD of the vehicle.

The output signals of the steering angle sensor 22, yaw rate sensor 24 and vehicle speed sensor 26 are fed to the ECU 20. The ECU 20 calculates the steering angle θ on the basis of the output signal of the steering angle sensor 22 and calculates a steering angle δ of the vehicle (more precisely, of the steerable front wheels). The ECU 20 further calculates the yaw rate w about the gravity center of the vehicle on the basis of the output signal of the yaw rate sensor 24 and the vehicle running speed SPD of the vehicle on the basis of the output signal of the vehicle speed sensor 26. On the basis of the thus calculated steering angle θ, yaw rate ω and vehicle running speed SPD, the ECU 20 estimates an actual turning radius R of the vehicle.

To the ECU 20, there is also connected a REVERSE SHIFT switch 28, which is placed in its ON state when a manually operable shift lever for a transmission is placed in a REVERSE position, and is placed in its OFF state when the shift lever is placed in any one of the other operating positions. On the basis of the output signal of the REVERSE SHIFT switch 28, the ECU 20 determines whether the vehicle is being moved backwards.

To the ECU 20, there are also connected a monitoring camera 30 disposed at a central part of a rear portion of the vehicle, and the above-indicated monitoring display 32 disposed within an operator's compartment of the vehicle. The monitoring camera 30 is arranged to take a rear view, which is a view as seen from the vehicle in the backward direction. Image data representative of the rear view are fed from the monitoring camera 30 to the ECU 20. When the ECU 20 determines that the vehicle is being moved backwards, the ECU 20 commands the monitoring display 32 to display the rear view represented by the image data received from the monitoring camera 30.

The ECU 20 calculates a path of movement (hereinafter referred to as "first estimated movement path") that is estimated to be taken by an outer rear wheel of the vehicle, on the basis of the currently calculated steering angle 6 of the steering wheel, yaw rate w and vehicle running speed SPD, and the currently estimated turning radius R of the vehicle. The outer rear wheel is one of the two rear wheels which is located on the outer side of the turning path of the vehicle. Further, the ECU 20 commands the monitoring display 32 to display the first estimated movement path, together with the rear view, during a backward movement of the vehicle. The ECU 20 further calculates a path of movement (hereinafter referred to as "second estimated movement path") which is estimated to be taken by the outer rear wheel when the vehicle is turned backwards at a vehicle steering angle δ₁ (=δₘₐₓ-β) which is smaller than the maximum permissible vehicle steering angle δₘₐₓ by a predetermined value β. The ECU 20 commands the monitoring display 32 to display this second estimated movement path, together with the rear view and the first estimated movement path. The predetermined value β is a relatively small value determined depending upon a variation in the height of the vehicle (vertical position of the camera 30) and a variation in the focal length of the camera 30, which variations are due to the different overall characteristics of the individual vehicles and different characteristics of various components of the vehicles.

There will next be described an application of the rear-view display apparatus, according to a first embodiment of this invention.

Figs. 2(A), 3(A), 4(A) and 5(A) show different situations or states of an automotive vehicle 50 at different points of time in order in the process of a backward movement, more specifically, a backward turning of the vehicle 50 into a garage which is defined by and between two white lines 52. Figs. 2(B), 3(B), 4(B) and 5(B) schematically illustrate contents displayed on a display screen 32a of the monitoring display 32, in the different situations of Figs. 2(A)-5(A). In Figs. 2-5, the first estimated movement path is represented by solid lines X, while the second estimated movement path is represented by broken lines Y. In the example of Fig. 2(A), the vehicle 50 is moved backwards such that a rear left corner point A and a rear right corner point B are moved to respective points A' and B', respectively. In this case, each of line A-A' and line B-B' represents the first estimated movement path X. For easier understanding of the profile of the vehicle 50 which have been moved, points A' and B' are connected by a solid line. It is also noted that the solid line X representing the first estimated movement path as displayed on the display screen 32a does not include two parallel segments corresponding to the parallel lines A-A' and B-B' shown in Fig. 2(A), but includes two straight segments which are connected by an intermediate straight segment and which diverge from each other in the direction away from the intermediate straight segment. The first estimated movement path X as displayed on the display screen 32a is given this divergence since the first estimated movement path X is superimposed on the rear view as taken by the monitoring camera 30 located at the central part of the rear portion of the vehicle 50.

In Fig. 2(A), two broken lines represent respective two second estimated movement paths Y that are taken by the respective rear left and right corner points A, B when the vehicle 50 is turned backwards with clockwise and counterclockwise steering actions, respectively. When the vehicle 50 is moved backwards into a garage (parking area) defined by the two white lines 52, the vehicle operator first drives the vehicle 50 in the backward direction, until one of the two second estimated movement paths Y which extends on the side of the two white lines 52 is substantially aligned at its far end with the near end of one of the two white lines 50 which is remote from the vehicle 50. The "far" and "near" ends of the path Y and the remote white line 52(A)re as seen from the vehicle 50. When the far end of the above-indicated one second estimated movement path Y is substantially aligned with the near end of the above-indicated remote white line 52, as indicated on the display screen 32a of Fig. 2(B), the steering wheel is turned in the clockwise direction until the second estimated movement path Y is substantially superimposed on the first estimated movement path X, as indicated in Fig. 3(B). Then, the steering angle θ is kept constant. After a suitable distance of the backward movement of the vehicle, the steering wheel is turned in the reverse direction (counterclockwise direction) so that the steering wheel is returned to the neutral position when the vehicle 50, that is, the first estimated movement path X becomes parallel to the white lines 52, as indicated in Fig. 4(B). In this neutral state of the steering wheel, the vehicle 50 is further moved straight backwards to a suitable position in the garage, as indicated in Figs. 5(A) and 5(B).

Figs. 6(A), 7(A), 8(A) and 9(A) show the automotive vehicle 50 at different points of time in order during a backward movement of the vehicle 50 into a parking area between two other vehicles 60, 62 already parked on a roadway, for instance, such that the vehicles 50, 60, and 62 are parked in a line, with relatively small distances between the vehicle 50 and the vehicles 60, 62. Figs. 6(B), 7(B), 8(B) and 9(B) schematically illustrate contents displayed on the display screen 32a of the monitoring display 32, in different situations of Figs. 6(A)-9(A). In Figs. 9(A) and 9(B), the first estimated movement path X is represented by solid lines.

According to the first embodiment of the invention, the monitoring display 32 displays vertical poles Z and a parking space mark S on its display screen 32a when a predetermined condition is satisfied where the vehicle 50 is moved (turned) backwards into the parking area between the two other vehicles 60, 62. The vertical poles Z have predetermined positional relationships with the vehicle 50, and the parking space mark S indicates an area between the two other vehicles 60, 62, into which the vehicle 50 can be moved for parking in line with the vehicles 60, 62, while maintaining the presently calculated steering angle 6 of the steering wheel. The two vertical poles Z define critical positions which are located rearwardly and laterally outwardly of the vehicle 50 and to which the rear right and left corners of the vehicle 50 can be moved when the vehicle 50 is turned with the clockwise and counterclockwise steering actions for the maximum permissible vehicle steering angle δ₁ₘₐₓ, that is, along the minimum vehicle turning radius. In the present embodiment, however, the positions of the vertical poles Z are determined so as to correspond to the vehicle steering angle δ defining a vehicle turning radius which is larger by a predetermined value than the minimum turning radius of the vehicle.

Where the vertical poles Z are displayed on the display screen 32a as illustrated in Fig. 6(B) when the vehicle 50 is moved backwards for parking between the two other vehicles 60, 62, the vehicle operator first drives the vehicle 50 backwards until one of the two vertical poles Z which corresponds to the steering direction (counterclockwise direction in this specific example) is substantially brought into alignment with the rear end of the first other vehicle 60. In the specific example of Figs. 6(A) and 6(B), the vehicle 50 is moved backwards until the left vertical pole Z as seen in Fig. 6(A) is substantially brought into alignment with the rear right corner of the vehicle 60. The vehicle 50 is stopped when the appropriate vertical pole Z is substantially aligned with the rear end of the first other vehicle 60, as shown in Figs. 7(A) and 7(B). Then, the steering wheel is turned (in the counterclockwise direction in this example) so that parking space mark S is positioned at the desired parking position between the two other vehicles 60, 62a, as indicated in Fig. 8(B). The vehicle 50 is then turned backwards. At this time, the first estimated movement path X appears on the display screen 32a of the monitoring display 32, in place of the parking space mark S, as indicated in Fig. 9(B). After a suitable distance of the backward movement of the vehicle 50, the steering wheel is turned in the reverse direction (clockwise direction) so that the steering wheel_is returned to the neutral position when the vehicle 50 becomes parallel to the left edge of the roadway. The vehicle 50 is further moved straight backwards to the desired position between the two other vehicles 60, 62.

As described above, the rear-view display apparatus constructed according to the first embodiment of this invention is arranged to display on the monitoring display 32a rear view which is taken by the monitoring camera 30 in the backward direction of the vehicle 50, and to superimpose the first and second estimated movement paths X, Y on the rear view displayed on the monitoring display 32. Thus, the present rear-view display apparatus is capable of assisting the vehicle operator in manipulating the steering wheel when the vehicle 50 is turned backwards into a garage, or into a parking area between the two other vehicles 60, 62 with a relatively short spacing therebetween, such that the vehicle 50 is parked in line with those vehicles 60, 62. The present rear-view display apparatus permits even an inexperienced vehicle driver to adequately manipulate the steering wheel for backward movement of the vehicle for parking.

It is noted that the monitoring camera 30 has a variation in its focal length, while the individual vehicles have, in a strict sense, different overall characteristics and different characteristics of various components thereof, which cause a variation in the height of the vehicle, more specifically, a variation in the vertical position of the camera. The vehicle height is also influenced by a load on the vehicle (e.g., the number of passengers aboard the vehicle). Accordingly, a vertical field of the rear view actually taken by the monitoring camera 30 may more or less deviate from the nominal vertical field. This deviation in the vertical field may cause a deviation of the actual path of backward movement of the vehicle 50, from the estimated path of backward movement of the vehicle corresponding to the maximum permissible steering angle of the vehicle 50, even if the vehicle 50 is turned backwards at the maximum steering angle along the estimated path of backward movement being displayed on the monitoring display 32. In this case, the vehicle operator may wish to increase the vehicle steering angle for rectifying the actual path of backward movement of the vehicle. However, the vehicle steering angle can no longer be increased, so that the actual path of movement of the vehicle 50 cannot be rectified into agreement with the estimated path of movement.

In view of the above drawback, the rear-view display apparatus according to the present embodiment of the invention is arranged to superimpose, on the rear view on the display screen 32a, the second estimated path Y that is to be taken by the vehicle 50 when the vehicle 50 is turned backwards at the steering angle δ₁ (=δₘₐₓ-β) which is smaller than the maximum permissible vehicle steering angle δₘₐₓ by the predetermined value β. This arrangement permits the vehicle operator to increase the vehicle steering angle δ by a suitable amount (by a maximum amount β) up to the maximum permissible value (δₘₐₓ), if necessary to rectify the actual path of backward movement of the vehicle 50 which has deviated from the second estimated movement path Y a certain time after the backward movement (turning) of the vehicle 50 along this path Y is initiated. Thus, the present embodiment makes it possible to rectify the actual path of backward movement of the vehicle 50 by increasing the steering angle δ by a suitable amount, when the actual path of backward movement has deviated from the second estimated movement path Y due to a variation of the actual vertical field of the rear view taken by the monitoring camera 30, with respect to the nominal vertical field. Accordingly, the present rear-view display apparatus enables the vehicle operator to suitably steer the vehicle 50 to park it in the desired parking area by turning the vehicle 50 backwards along the appropriate path.

The graph of Fig. 10 indicates a relationship between the steering angle θ of the steering wheel and an operating force F (steering force F) that should be applied to the steering wheel by the vehicle operator. In this graph, the steering angle θ is a positive value when the steering wheel is turned in the clockwise direction, and a negative value when the steering wheel is turned in the counterclockwise direction, and the steering force F is a positive value when the steering wheel is turned in the clockwise direction. It will be understood from the graph of Fig. 10 that the steering force F necessary to maintain the present steering angle θ abruptly increases when the steering angle 6 exceeds a certain value in both of the clockwise and counterclockwise steering actions. When the steering angle θ is close to a maximum value θₘₐₓ, the steering force F is extremely large (F = Fₘₐₓ) .

As described above, the present rear-view display apparatus is arranged to superimpose, on the rear view displayed on the monitoring display 32, the second estimated movement path Y which is to be taken by the vehicle 50 when the vehicle is turned backward at the vehicle steering angle δ₁ which is smaller by the predetermined value β than the maximum steering angle δₘₐₓ. The steering force F necessary for the vehicle operator to maintain the vehicle steering angle δ₁ so as to turn the vehicle 50 backwards along the second estimated movement path Y is not so large, that is, F = F₁ < Fₘₐₓ. Further, the vehicle operator is less likely to turn the vehicle 50 backwards at the maximum permissible steering angle ä ₘₐₓ, when the vehicle operator manipulates the steering wheel according to the displayed second estimated movement path Y. Thus, the present rear-view display apparatus permits a reduction of the operator's efforts necessary to manipulate the steering wheel for backward turning of the vehicle 50. Where the vehicle 50 is equipped with a power steering system adapted to assist the vehicle operator so as to reduce the required steering force F, the present rear-view display apparatus permits a reduction of the required assisting force to be produced by the power-steering system, so that the fuel economy of the vehicle is accordingly reduced.

In the first embodiment of Figs. 2-9, the monitoring display 32 is adapted to display lines representative of the first and second estimated movement paths X and Y, vertical poles Z and parking space mark S on its display screen 32a. In the presence of a variation in the height of the vehicle 50 due to the variation in the focal length of the monitoring camera 30, differences of the overall characteristics and component characteristics of the vehicle 50 from the other vehicles, and variation in the vehicle load (number of the passengers on the vehicle 50), the vertical positions of the above-indicated lines and rectangular block as superimposed on the rear view on the display screen 32a may deviate from the actual vertical positions. In this case, the vehicle operator's manipulation of the steering wheel following the lines representative of the first and second estimated movement paths X, Y does not result in the actual backward turning of the vehicle along the desired movement path for appropriate parking of the vehicle 50. In this respect, it is not essential to display the first and second estimated movement paths X, Y, vertical poles Z and parking space mark S in the form of lines. Rather, those movement paths X, Y, vertical poles Z and parking space mark S may be represented by bands or strips, as in a second embodiment of this invention which will be described.

Fig. 11 is a view schematically illustrating a view displayed on the display screen 32a in the situation shown in Fig. 4(A), according to the second embodiment, in which the first estimated movement path X is represented by a strip. Fig. 12 is a view schematically illustrating a view displayed on the display screen 32a in the situation shown in Fig. 7(A), according to the second embodiment, in which the vertical poles Z are represented by respective strips. Fig. 13 is a view schematically illustrating a view displayed on the display screen 32a in the situation shown in Fig. 8(A), according to the second embodiment, in which one of the four sides of the rectangular block representing the parking space mark S is represented by a strip. Here, it is not limited to represent the parking space mark S by showing one of the four sides of the rectangular block thereof having a strip. It may be shown by two sides or all sides having strips. Fig. 14 is a graph indicating a distribution of color density taken along line A₁-A₂ across the path X in the form of the strip in the view displayed on the display screen 32a in the case of Fig. 11.

The ECU 20 of the rear-view display apparatus constructed according to the second embodiment is arranged first calculate reference lines representative of the first estimated movement path X, vertical poles Z (whose positions have a predetermined relationship with the vehicle 50), and the above-indicated one side of the rectangular block of the parking space mark S (representing the parking space into which the vehicle can be turned backwards for parking when the present steering angle 6 of the steering wheel is maintained). Then, the ECU 20 commands the monitoring display 32 to superimpose the first estimated movement path X, vertical poles Z and parking space mark S on the rear view displayed on the display screen 32a, such that the path X and vertical poles Z and the above-indicated one side of the rectangular block of the parking space mark S are represented by respective strips each of which has a width ΔL on each of the opposite sides of the calculated reference line indicated above, as indicated in Fig. 11. Thus, each strip has an overall width of 2AL, and a centerline aligned with the reference line.

The width 2AL of each strip representing the path X, each vertical pole Z and one side of the rectangular block of the parking space mark S is determined by taking account of the variation in the height of the vehicle due to the variation in the focal length of the monitoring camera 30, characteristic differences of the specific vehicle and the number of the passengers on the vehicle, which have been described. The ECU 20 is further arranged so that each strip displayed on the display screen 32a of the monitoring display 32 has a distribution of color density in the width direction such that the color density decreases in the opposite directions away from the above-indicated, reference line (away from the centerline of each strip), as shown in Fig. 14. Each strip is displayed on the display screen 32a such that the portion of the rear view which underlies the strip can be seen by the operator through the strip. The color density need not decrease symmetrically with respect to the reference line in the width direction of the strip. For instance, the color density may be made comparatively high in a width portion of each strip which can be reached by the vehicle 50 with a relatively high possibility, and comparatively low in a width portion of the strip which can be reached by the vehicle with a relatively low possibility.

In the second embodiment of this invention, the first estimated path X and vertical poles Z and the above-indicated one side of the rectangular block of the parking space mark S are represented by respective strips, as shown in Figs. 11-13, so that the vehicle operator is not required to accurately follow the displayed path X, vertical poles Z and parking space mark S. Accordingly, the operator load is reduced in the second embodiment than in the first embodiment in which the vehicle operator tends to accurately follow the lines representative of the path X, the vertical lines Z and the rectangular block of the parking space mark S. Further, the second embodiment may be suitably practiced on an assumption that the vehicle operator manipulates the steering wheel with a recognition that the height of the vehicle 50 varies due to the variation in the focal length of the monitoring camera 30, characteristic differences of the specific vehicle and the number of the passengers on the vehicle.

In the second embodiment wherein the first estimated movement path X, vertical poles Z and one of the four sides of the rectangular block of the parking space mark S are represented by the respective strips, the color density of each strip is distributed so as to decrease in the opposite width directions away from the reference line, as described above, so that the vehicle operator can perceive the position of the reference line on the display screen 32a of the monitoring display 32. In addition, each strip superimposed on the rear view does not disturb the visibility of the corresponding underlying portion of the rear view, allowing the vehicle operator to see the entire image of the rear view taken from the vehicle in the backward direction, thereby permitting easy manipulation of the steering wheel so as to efficiently guide the vehicle (moving body) to a desired position such as the parking area.

The present invention discloses a rear-view display system wherein a rear view taken from a vehicle 50 in backward direction by a monitoring camera 30 is displayed on a monitoring display 32. A first estimated path X of backward movement of the vehicle to be taken when the vehicle is turned backwards at the present vehicle turning radius R and a second estimated path Y of backward movement of the vehicle to be taken when the vehicle is moved backward at a steering angle δ₁ which is smaller by a predetermined value β than a maximum permissible steering angle δₘₐₓ of the vehicle are superimposed on this rear view. The present system permits the vehicle operator to increase the vehicle steering angle δ by the maximum amount β, if necessary to rectify the actual path of the vehicle which has deviated from the second estimated path Y, so that the vehicle can be suitably guided to a desired position.

While the presently preferred embodiments of the present invention have been described above by reference to the accompanying drawings, for illustrative purpose only, it is to be understood that the invention is not limited to the illustrated embodiments, but may be embodied with various changes and modifications which may occur to those skilled in the art, without departing from the spirit and scope of the invention. It is also to be understood that the present invention may be embodied with suitable combinations and configurations of elements other than the specific combinations and configurations in the illustrated embodiments.

A rear-view display system wherein a rear view taken from a vehicle (50) in backward direction by a monitoring camera (30) is displayed on a monitoring display (32). A first estimated path (X) of backward movement of the vehicle to be taken when the vehicle is turned backwards at the present vehicle turning radius (R) and a second estimated path (Y) of backward movement of the vehicle to be taken when the vehicle is moved backward at a steering angle (δ₁) which is smaller by a predetermined value (β) than a maximum permissible steering angle (δₘₐₓ) of the vehicle are superimposed on this rear view. The present system permits the vehicle operator to increase the vehicle steering angle (δ) y the maximum amount (β), if necessary to rectify the actual path of the vehicle which has deviated from the second estimated path (Y), so that the vehicle can be suitably guided to a desired position.

## Claims

1. A rear-view display apparatus for displaying on a display screen a rear view taken from a moving body in a backward direction, wherein:
a control device (**20**) is provided to control a display (**32**) having said display screen (**32a**), wherein said control device (**20**) includes:
first control means for controlling said display (**32**) such that a first estimated path (**X**) of backward movement that is to be taken by said moving body (**50**) when said moving body is moved backwards at an actual value (δ) of a steering angle of the moving body is superimposed on said rear view on said display screen, as said first estimated path (**X**) of backward movement of said moving body; **characterized in that** said control device (**20**) further includes:
second control means for controlling said display (**32**) such that a second estimated path (**Y**) of backward movement of said moving body estimated to be taken at a steering angle (δ**1**) smaller by a predetermined value (β) than a maximum permissible steering angle (δ**max**) is superimposed on said rear view on said display screen, as said second estimated path (**Y**) of backward movement of said moving body.

2. A rear-view display apparatus according to claim 1, **characterized by** comprising a steering angle sensor (**22**) operable to generate an output signal representative of a steering angle (θ) of a steering wheel of said moving body (**50**), a yaw rate sensor (**24**) operable to generate an output signal representative of a yaw rate about a gravity center of said moving body, and a speed sensor (**26**) operable to generate an output signal representative of a moving speed of said moving body, said control device includes an electronic control unit (**20**) operable to calculate a turning radius (**R**) of said moving body on the basis of said output signals of said steering angle sensor, said yaw rate sensor and said speed sensor.

3. A rear-view display apparatus according to claim 1 or 2, **characterized in that** said control device is adapted to control said display such that said path (**Y**) of backward movement is represented by a strip displayed on said display screen, said strip having a predetermined width (**2**Δ **L**) .

4. A rear-view display apparatus according to claim 1 or 2, **characterized in that** said control device is adapted to control said display such that each of at least one of said first and second estimated paths (**X**, **Y**) of backward movement is represented by a strip displayed on said display screen, said strip having a predetermined width (**2**Δ **L**) .

5. A rear-view display apparatus according to claim 1 or 2, **characterized in that** said control device is adapted to control said display such that a position (**Z**, **S**) of said moving body (**50**) is superimposed on said rear view on said display screen (**32a)** and is represented by a strip displayed on said display screen (**32a**), said strip having a predetermined width (**2**Δ**L**), wherein the position (**Z, S**) represents the position to which said moving body (**50**) is estimated to be turned backwards along a turning radius (**R**) larger by a predetermined value than a smallest turning radius of the moving body.

6. A rear-view display apparatus according to claim 5, **characterized in that** said control device is adapted to control said display such that each of at least one of said path (**X**) of backward movement and said position (**Z**, **S**) of said moving body (**50**) is represented by a strip displayed on said display screen (**32a**), said strip having a predetermined width (**2**Δ**L**).

7. A rear-view display apparatus according to claim 6, wherein said control device (**20**) includes calculating means for calculating a reference line for each of said at least one of said path (**X**, **Y**) of backward movement and said position (**Z**, **S**) of said moving body, said control device further including control means for displaying said at least one of said path (**X**, **Y**) and said position (**Z**, **S**) in a color such that a density of said color changes in a direction of width of said strip.

8. A rear-view display apparatus according to claim 7, wherein said control means controls said display (**32**) such that a portion of said rear view which underlies said at least one of said path (**X**, **Y**) and said position (**Z**, **S**) is visible through said at least one of said path and said position.

9. A method of displaying on a display screen a rear view taken from a moving body in a backward direction, **characterized by** comprising the steps of:
superimposing, on said rear view on said display screen (**32a**), a first estimated path (**X**) of backward movement that is to be taken by said moving body (**50**) when said moving body is moved backwards at an actual value (δ) of a steering angle of the moving body, and
superimposing, on said rear view on said display screen (**32a**), a second estimated path (**Y**) of backward movement that is to be taken by said moving body (**50**) when said moving body (**50**) is moved backwards at a steering angle (δ **1**) which is smaller by a predetermined value (β) than a maximum permissible steering angle (δ**max**) of the moving body (**50**).

10. A method according to claim 9, **characterized by** further comprising a step of superimposing a position (**Z**, **S**) to which said moving body (**50**) is estimated to be turned backwards along a turning radius (**R**) larger by a predetermined value than a smallest turning radius of the moving body (**50**).

11. A method according to claim 10, **characterized in that** each of at least one of said first and second estimated paths (**X**, **Y**) of backward movement of said moving body (50) and said position (**Z**, **S**) is represented by a strip displayed on said display screen, said strip having a predetermined width (**2**Δ**L**).

12. A method according to claim 11, **characterized in that** at least one of said first and second paths (**X**, **Y**) and said position (**Z**, **S**) is displayed in a color such that a density of said color changes in a direction of width of said strip.

## Patentansprüche

1. Rückblickanzeigegerät zum Anzeigen eines Rückblicks, der von einem sich bewegenden Körper in einer Rückwärtsrichtung aufgenommen wird auf einem Anzeigeschirm, wobei:
eine Steuerungsvorrichtung (**20**) bereitgestellt ist, um eine Anzeige (**32**), die den Anzeigeschirm (**32a**) aufweist, zu steuern, wobei die Steuerungsvorrichtung (**20**) umfasst:
eine erste Steuerungseinrichtung zum derartigen Steuern der Anzeige (**32**), dass ein erster abgeschätzter Pfad (**X**) einer Rückwärtsbewegung, der durch den sich bewegenden Körper (**50**) abgefahren wird, wenn sich der sich bewegende Körper bei einem Ist-Wert (δ) eines Lenkwinkels des sich bewegenden Körpers nach hinten bewegt, auf dem Rückblick auf dem Anzeigeschirm als der erste abgeschätzte Pfad (**X**) einer Rückwärtsbewegung des sich bewegenden Körpers eingeblendet wird; **dadurch gekennzeichnet, dass** die Steuerungsvorrichtung (**20**) weiterhin umfasst:
eine zweite Steuerungseinrichtung zum derartigen Steuern der Anzeige (**32**), dass ein zweiter abgeschätzter Pfad (**Y**) einer Rückwärtsbewegung des sich bewegenden Körpers, der abgeschätzt wird, bei einem Lenkwinkel (δ**1**) abgefahren zu werden, der um einen vorbestimmten Wert (β) kleiner ist als ein maximal möglicher Lenkwinkel (δ**max**), auf dem Rückblick auf dem Anzeigeschirm als der zweite abgeschätzte Pfad (**Y**) einer Rückwärtsbewegung des sich bewegenden Körpers eingeblendet wird.

2. Rückblickanzeigegerät gemäß Anspruch 1, **gekennzeichnet durch** Aufweisen eines Lenkwinkelsensors (**22**), der betreibbar ist, ein Ausgabesignal zu erzeugen, das einen Lenkwinkel (θ) eines Lenkrads des sich bewegenden Körpers (**50**) angibt, eines Gierratensensors (**24**), der betreibbar ist, ein Ausgabesignal zu erzeugen, das eine Gierrate um einen Schwerpunkt des sich bewegenden Körpers angibt, und eines Geschwindigkeitssensors (**26**), der betreibbar ist, ein Ausgabesignal zu erzeugen, das eine Bewegungsgeschwindigkeit des sich bewegenden Körpers angibt, wobei die Steuerungsvorrichtung eine elektronische Steuerungseinheit (**20**) umfasst, die betreibbar ist, einen Spurkreisradius (**R**) des sich bewegenden Körpers auf der Basis der Ausgabesignale des Lenkwinkelsensors, des Gierratensensors und des Geschwindigkeitssensors zu berechnen.

3. Rückblickanzeigegerät gemäß Anspruch 1 oder 2, **dadurch gekennzeichnet, dass** die Steuerungsvorrichtung eingerichtet ist, die Anzeige derart zu steuern, dass der Pfad (**Y**) einer Rückwärtsbewegung durch ein auf dem Anzeigeschirm angezeigtes Band angegeben wird, wobei das Band eine vorbestimmte Breite (**2**Δ**L**) aufweist.

4. Rückblickanzeigegerät gemäß Anspruch 1 oder 2, **dadurch gekennzeichnet, dass** die Steuerungsvorrichtung eingerichtet ist, die Anzeige derart zu steuern, dass jeder, der erste und/oder der zweite abgeschätzte Pfad (**X**, **Y**) einer Rückwärtsbewegung durch ein auf dem Anzeigeschirm angezeigtes Band angegeben wird, wobei das Band eine vorbestimmte Breite (**2**Δ**L**) aufweist.

5. Rückblickanzeigegerät gemäß Anspruch 1 oder 2, **dadurch gekennzeichnet, dass** die Steuerungsvorrichtung eingerichtet ist, die Anzeige derart zu steuern, dass eine Position (**Z**, **S**) des sich bewegenden Körpers (**50**) auf dem Rückblick auf dem Anzeigeschirm (**32a**) eingeblendet und durch ein auf dem Anzeigeschirm (**32a**) angezeigtes Band dargestellt wird, wobei das Band eine vorbestimmte Breite (**2**Δ**L**) aufweist, wobei die Position (**Z**, **S**) die Position angibt, zu der sich der sich bewegende Körper (**50**) schätzungsgemäß entlang eines Spurkreisradius (**R**) nach hinten bewegt, der um einen vorbestimmten Wert größer als ein kleinster Spurkreisradius des sich bewegenden Körpers ist.

6. Rückblickanzeigegerät gemäß Anspruch 5, **dadurch gekennzeichnet, dass** die Steuerungsvorrichtung eingerichtet ist, die Anzeige derart zu steuern, dass jeder, der Pfad (**X**) einer Rückwärtsbewegung und/oder die Position (**Z**, **S**) des sich bewegenden Körpers (**50**) durch ein auf dem Anzeigeschirm (**32a**) angezeigtes Band dargestellt wird, wobei das Band eine vorbestimmte Breite (**2**Δ**L**) aufweist.

7. Rückblickanzeigegerät gemäß Anspruch 6, wobei die Steuerungsvorrichtung (**20**) eine Berechnungseinrichtung zum Berechnen einer Referenzlinie für jeden, den Pfad (**X**, **Y**) einer Rückwärtsbewegung und/oder die Position (**Z**, **S**) des sich bewegenden Körpers umfasst, wobei die Steuerungsvorrichtung weiterhin eine Steuerungseinrichtung zum Anzeigen des Pfades (**X**, **Y**) und/oder der Position (**Z**, **S**) in einer Farbe derart umfasst, dass sich eine Dichte der Farbe in einer Richtung einer Breite des Bandes ändert.

8. Rückblickanzeigegerät gemäß Anspruch 7, wobei die Steuerungseinrichtung die Anzeige (**32**) derart steuert, dass ein Abschnitt des Rückblicks, der dem Pfad (**X**, **Y**) und/oder der Position (**Z**, **S**) unterliegt, durch den Pfad und/oder die Position hindurch sichtbar ist.

9. Verfahren zum Anzeigen eines Rückblicks, der von einem sich bewegenden Körper in einer Rückwärtsrichtung aufgenommen wird auf einem Anzeigeschirm, **gekennzeichnet durch** die Schritte:
Einblenden eines ersten abgeschätzten Pfades (**X**) einer Rückwärtsbewegung auf dem Rückblick auf dem Anzeigeschirm (**32a**), der von dem sich bewegenden Körper (**50**) abgefahren wird, wenn sich der sich bewegende Körper bei einem Ist-Wert (δ) eines Lenkwinkels des sich bewegenden Körpers nach hinten bewegt, und
Einblenden eines zweiten abgeschätzten Pfades (**Y**) einer Rückwärtsbewegung auf dem Rückblick auf dem Anzeigeschirm (**32a**), der von dem sich bewegenden Körper (**50**) abgefahren wird, wenn sich der sich bewegende Körper (**50**) bei einem Lenkwinkel (δ**1**), der um einen vorbestimmten Wert (β) kleiner ist als ein maximal möglicher Lenkwinkel (δ**max**) des sich bewegenden Körpers (**50**), nach hinten bewegt.

10. Verfahren gemäß Anspruch 9, **gekennzeichnet durch** einen weiteren Schritt eines Einblendens einer Position (**Z**, **S**), zu der sich der sich bewegende Körper (**50**) schätzungsgemäß entlang eines Spurkreisradius (**R**), der um einen vorbestimmten Wert größer ist als ein kleinster Spurkreisradius des sich bewegenden Körpers (**50**), nach hinten bewegt.

11. Verfahren gemäß Anspruch 10, **dadurch gekennzeichnet, dass** jeder, der erste und/oder der zweite abgeschätzte Pfad (**X**, **Y**) einer Rückwärtsbewegung des sich bewegenden Körpers (**50**) und die Position (**Z**, **S**) durch ein auf dem Anzeigeschirm angezeigtes Band dargestellt wird, wobei das Band eine vorbestimmte Breite (**2**Δ**L**) aufweist.

12. Verfahren gemäß Anspruch 11, **dadurch gekennzeichnet, dass** der erste und/oder der zweite Pfad (**X**, **Y**) und die Position (**Z**, **S**) in einer Farbe derart angezeigt werden, dass sich eine Dichte der Farbe in einer Richtung der Breite des Bandes ändert.

## Revendications

1. Appareil d'affichage de vue arrière pour afficher sur un écran d'affichage une vue arrière prise à partir d'un corps mobile dans une direction vers l'arrière, dans lequel:
un dispositif de commande (20) est fourni pour commander un afficheur (32) ayant ledit écran d'affichage (32a), dans lequel ledit dispositif de commande (20) inclut:
un premier moyen de commande pour commander ledit afficheur (32) de telle sorte qu'une première trajectoire estimée (X) de mouvement vers l'arrière qui sera prise par ledit corps mobile (50) lorsque ledit corps mobile est déplacé vers l'arrière à une valeur effective (δ) d'un angle de braquage du corps mobile soit superposée sur ladite vue arrière sur ledit écran d'affichage, comme ladite première trajectoire estimée (X) de mouvement vers l'arrière dudit corps mobile; **caractérisé en ce que** ledit dispositif de commande (20) inclut en plus:
un deuxième moyen de commande pour commander ledit afficheur (32) de telle sorte qu'une deuxième trajectoire estimée (Y) de mouvement vers l'arrière dudit corps mobile estimée être prise à un angle de braquage (δ1) plus petit d'une valeur prédéterminée (β) qu'un angle de braquage admissible maximal (δmax) soit superposée sur ladite vue arrière sur ledit écran d'affichage, comme ladite deuxième trajectoire estimée (Y) de mouvement vers l'arrière dudit corps mobile.

2. Appareil d'affichage de vue arrière selon la revendication 1, **caractérisé par** le fait de comprendre un capteur d'angle de braquage (22) exploitable pour générer un signal de sortie représentatif d'un angle de braquage (θ) d'un volant de direction dudit corps mobile (50), un capteur d'amplitude du mouvement de lacet (24) exploitable pour générer un signal de sortie représentatif d'une amplitude du mouvement de lacet autour d'un centre de gravité dudit corps mobile, et un capteur de vitesse (26) exploitable pour générer un signal de sortie représentatif d'une vitesse de déplacement dudit corps mobile, ledit dispositif de commande inclut une unité de commande électronique (20) exploitable pour calculer un rayon de braquage (R) dudit corps mobile sur la base desdits signaux de sortie dudit capteur d'angle de braquage, dudit capteur d'amplitude du mouvement de lacet et dudit capteur de vitesse.

3. Appareil d'affichage de vue arrière selon la revendication 1 ou 2, **caractérisé en ce que** ledit dispositif de commande est adapté pour commander ledit afficheur de telle sorte que ladite trajectoire (Y) de mouvement vers l'arrière soit représentée par une bande affichée sur ledit écran d'affichage, ladite bande ayant une largeur prédéterminée (2ΔL).

4. Appareil d'affichage de vue arrière selon la revendication 1 ou 2, **caractérisé en ce que** ledit dispositif de commande est adapté pour commander ledit afficheur de telle sorte que chacune d'au moins l'une desdites première et deuxième trajectoires estimées (X, Y) de mouvement vers l'arrière soit représentée par une bande affichée sur ledit écran d'affichage, ladite bande ayant une largeur prédéterminée (2ΔL).

5. Appareil d'affichage de vue arrière selon la revendication 1 ou 2, **caractérisé en ce que** ledit dispositif de commande est adapté pour commander ledit afficheur de telle sorte qu'une position (Z, S) dudit corps mobile (50) soit superposée sur ladite vue arrière sur ledit écran d'affichage (32a) et soit représentée par une bande affichée sur ledit écran d'affichage (32a), ladite bande ayant une largeur prédéterminée (2ΔL), où la position (Z, S) représente la position à laquelle ledit corps mobile (50) est estimé être retourné vers l'arrière le long d'un rayon de braquage (R) plus grand d'une valeur prédéterminée qu'un rayon de braquage qui est le plus petit du corps mobile.

6. Appareil d'affichage de vue arrière selon la revendication 5, **caractérisé en ce que** ledit dispositif de commande est adapté pour commander ledit afficheur de telle sorte que chacune d'au moins l'une de ladite trajectoire (X) de mouvement vers l'arrière et ladite position (Z, S) dudit corps mobile (50) soit représentée par une bande affichée sur ledit écran d'affichage (32a), ladite bande ayant une largeur prédéterminée (2ΔL).

7. Appareil d'affichage de vue arrière selon la revendication 6, dans lequel ledit dispositif de commande (20) inclut un moyen de calcul pour calculer une ligne de référence pour chacune desdites au moins une de ladite trajectoire (X, Y) de mouvement vers l'arrière et ladite position (Z, S) dudit corps mobile, ledit dispositif de commande incluant en plus un moyen de commande pour afficher les dites au moins une de ladite trajectoire (X, Y) et ladite position (Z, S) en une couleur de telle sorte qu'une densité de ladite couleur change dans une direction de largeur de ladite bande.

8. Appareil d'affichage de vue arrière selon la revendication 7, dans lequel ledit moyen de commande effectue une commande dudit afficheur (32) de telle sorte qu'une portion de ladite vue arrière qui est située en dessous desdites au moins une de ladite trajectoire (X, Y) et ladite position (Z, S) soit visible à travers les dites au moins une de ladite trajectoire et ladite position.

9. Procédé pour afficher sur un écran d'affichage une vue arrière prise à partir d'un corps mobile dans une direction vers l'arrière, **caractérisé par** le fait de comprendre les étapes de:
superposer, sur ladite vue arrière sur ledit écran d'affichage (32a), une première trajectoire estimée (X) de mouvement vers l'arrière qui est à prendre par ledit corps mobile (50) lorsque ledit corps mobile est déplacé vers l'arrière à une valeur effective (δ) d'un angle de braquage du corps mobile, et superposer, sur ladite vue arrière sur ledit écran d'affichage (32a), une deuxième trajectoire estimée (Y) de mouvement vers l'arrière qui est à prendre par ledit corps mobile (50) lorsque ledit corps mobile (50) est déplacé vers l'arrière à un angle de braquage (δ1) qui est plus petit d'une valeur prédéterminée (β) qu'un angle de braquage admissible maximal (δmax) du corps mobile (50).

10. Procédé selon la revendication 9, **caractérisé par** le fait de comprendre en plus une étape consistant à superposer une position (Z, S) à laquelle ledit corps mobile (50) est estimé être retourné vers l'arrière le long d'un rayon de braquage (R) plus grand d'une valeur prédéterminée qu'un rayon de braquage qui est le plus petit du corps mobile (50).

11. Procédé selon la revendication 10, **caractérisé en ce que** chacune d'au moins l'une desdites première et deuxième trajectoires estimées (X, Y) de mouvement vers l'arrière dudit corps mobile (50) et ladite position (Z, S) est représentée par une bande affichée sur ledit écran d'affichage, ladite bande ayant une largeur prédéterminée (2ΔL).

12. Procédé selon la revendication 11, **caractérisé en ce que** au moins l'une desdites première et deuxième trajectoires (X, Y) et ladite position (Z, S) est affichée en une couleur de telle sorte qu'une densité de ladite couleur change dans une direction de largeur de ladite bande.
